**Europäisches Patentamt**

**European Patent Office**

**Office européen des brevets**

(11) Publication number: **0 109 175**
**B1**

# EUROPEAN PATENT SPECIFICATION

(45) Date of publication of patent specification: **14.01.87**

(51) Int. Cl.⁴: **B 24 B 39/00, C 21 D 7/04,**
**B 23 P 9/04**

(21) Application number: **83306104.7**

(22) Date of filing: **07.10.83**

(54) Method of making a cast iron sealing ring.

(30) Priority: **12.11.82 US 440963**

(43) Date of publication of application:
**23.05.84 Bulletin 84/21**

(45) Publication of the grant of the patent:
**14.01.87 Bulletin 87/03**

(84) Designated Contracting States:
**DE FR GB**

(56) References cited:
**US-A-1 116 776**
**US-A-2 422 431**
**US-A-3 638 464**
**US-A-3 834 200**
**US-A-4 098 515**

(73) Proprietor: **GENERAL MOTORS CORPORATION**
**General Motors Building 3044 West Grand**
**Boulevard**
**Detroit Michigan 48202 (US)**

(72) Inventor: **Symons, James Donald**
**28705 Carmel Court**
**Southfield Michigan 48076 (US)**

(74) Representative: **Breakwell, John Neil Bower**
**et al**
**GM Patent Section Luton Office (F6) P.O. Box**
**No. 3 Kimpton Road**
**Luton Beds. LU2 OSY (GB)**

Courier Press, Leamington Spa, England.

## Description

This invention relates to a method of making a cast iron sealing ring.

Annular sealing rings are quite often used as face seals installed between a stationary housing and a rotatable shaft when it is desirable to transmit fluid under pressure between the shaft and housing. The sealing ring is pressurized such that the outer peripheral surface of the ring expands outwardly against the stationary housing and one of the annular faces of the ring is held in sealing relationship against the rotating shaft.

Generally, the annular sealing ring will remain stationary with the housing such that a dynamic sealing relationship exists between the annular surface and the rotating shaft. It is preferable to maintain a hydrodynamic seal at this juncture so that friction forces are reduced and very little wear occurs between the sealing ring and the shaft.

Automatic transmissions generally utilize seals such as those described above on the transmission input shaft which extends between the torque converter turbine and the input clutch. Many automatic transmissions use a seal member manufactured from a plastics material such as polytetrafluorethylene (PTFE). Although PTFE seals provide good wear resistance, their dimensional stability characteristics are such that the leakage occuring at the seal is intermediate and random. The randomness of this leakage increases the difficulty of providing consistent shift calibration from transmission to transmission.

It has been found that cast iron sealing rings will provide a more consistent leakage pattern such that shift calibration is more consistent. However, cast iron sealing rings generally have high friction losses.

By the present invention there is provided a method of making a cast iron sealing ring that is adapted to be installed in an annular groove in a rotary shaft with the outer peripheral surface of the ring in stationary sealing contact against a stationary housing surface and a flat annular surface of the ring held by hydraulic fluid in rotary sealing contact with a side wall of the groove, the flat annular surface of the ring having a hardness in the range of 45 $R_c$ to 50 $R_c$, characterised in that the method comprises the steps of:

mounting the sealing ring in an annular groove formed in a workpiece holder with the flat annular surface of the ring exposed;

rotating the workpiece holder at a speed in the range of 90 to 110 revolutions per minute;

rotating a work tool, having a plurality of flexible flap members with a plurality of cast shot embedded therein, at a speed in the range of 2600 to 3000 revolutions per minute about an axis that is disposed perpendicular to the axis of rotation of the workpiece holder;

effecting relative movement of the workpiece holder and the work tool to move the workpiece holder into the path of the flap members of the work tool with an interference amount in the range of 9 to 11 mm to effect cold-working of the flat annular surface of the sealing ring; and

effecting relative movement of the workpiece holder and the work tool to retract the workpiece holder from the path of the flap members.

A method in accordance with the present invention has the potential to provide an improved surface finish of the annular surface to permit a hydrodynamic sealing relationship between the sealing surface and a rotating shaft. Cold-working of the sealing surface by the use of a method in accordance with the present invention can provide a surface finish which encourages the development of a hydrodynamic film, when the sealing ring is installed in a transmission, for reducing the frictional forces and thereby improving the overall efficiency of the transmission.

In the drawing:

Figure 1 is an isometric view diagrammatically representing a method in accordance with the present invention of making a cast iron sealing ring;

Figure 2 is an isometric view of a sealing ring to which the method in accordance with the invention may be applied; and

Figure 3 is a partial sectional view of a rotary shaft, a housing and a sealing ring in operating relationship.

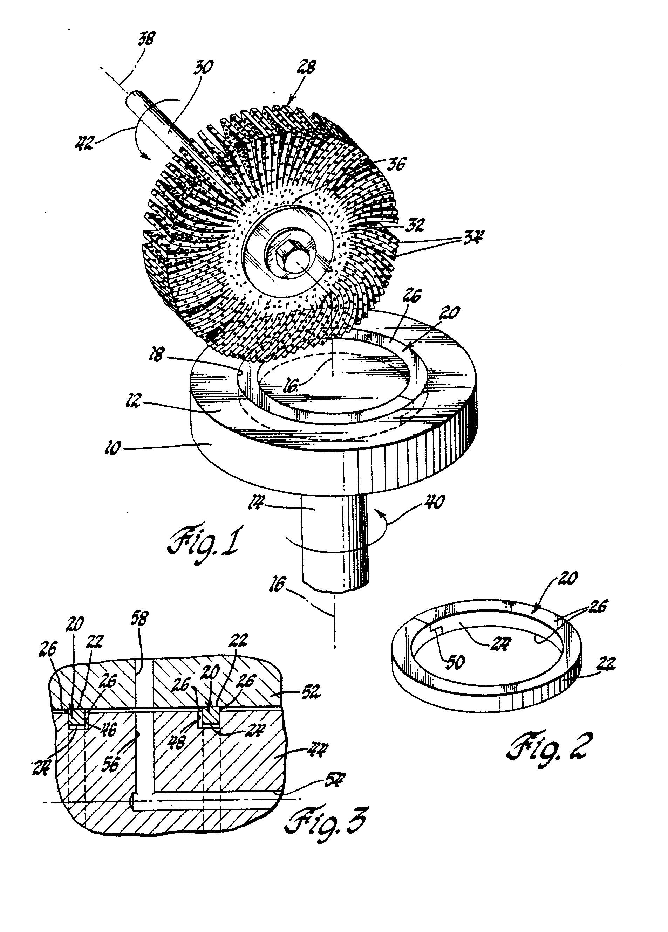

In the drawing, wherein like characters represent like parts throughout the several views, there is shown in Figure 1 a workpiece holder 10 having a flange 12 and a shaft 14 which are unitarily rotatable about an axis 16. The flange 12 has formed therein an annular groove 18 in which is disposed a sealing ring 20 such as that shown in Figure 2. The sealing ring 20, as seen in Figure 2, has an outer cylindrical surface 22, an inner cylindrical surface 24 and a pair of oppositely disposed flat annular surfaces 26. The sealing ring 20 is placed in the groove 18 such that one of the flat annular surfaces 26 as in the same plane as the surface of the flange 12.

A work tool 28 includes a shaft 30 and a rotatable body 32 which comprises a plurality of flap members 34 having cast iron shot embedded therein, and a hub 36. The hub 36 is secured for unitary rotation with the shaft 30 about an axis 38. The axis 38 is perpendicular to the axis 16. The work tool 28 is preferably a Rotopeen (Trade mark) wheel as manufactured and sold by the 3M Company.

During operation, the workpiece holder 10 is rotated in the direction of arrow 40 of Figure 1, and the work tool 28 is rotated in the direction of arrow 42. As seen in Figure 1, this will result in the flap members 34 moving in the opposite direction to the annular surface 26. To cold-work the flat annular surface 26, the flap members 34 are moved into contact with the flat annular surface 26 such that the cast iron shot embedded in the flap members will cause cold-working of the flat annular surface 26. During the process, the amount of interference between the flap members 34 and flat annular surface 26 is controlled so as to achieve the proper angle of incidence with which the cast iron shot in the flap members 34 strike the flat annular surface 26. Also controlled during the process are the speed of the holder 10, the speed of the work tool 28, and the time span during which the flap members 34 are disposed in interference with the flat annular surface 26. It is preferable that the cast iron shot size be constant throughout the several flap members.

It has been found that the above parameters, that is, flap member interference, machining time, shot size and flap member speed should be increased as the hardness of the flat annular surface 26 is increased. As a general rule, the speed of the workpiece holder 10 is maintained constant.

To provide an annular surface having a hardness of 45 $R_c$ with a cold-work surface wherein the slope of the indentation is approximately 2 to 3 degrees, and the radius of curvature of the asperities is approximately 0.2 to 0.3 mm with a roughness width surfacing or wave length of at least 0.25 mm, the following parameters should be maintained:

| Workpiece holder speed | 100 rpm |
|---|---|
| Work tool speed | 2800 rpm |
| Interference amount | 9 to 11 mm |
| Cast iron shot size | #110 |
| Time of cold-working | 15 seconds |

With these parameters, it has been found that a satisfactory low-friction sealing surface is obtained.

Tests during which a cold-worked flat annular sealing surface was rotated against a smooth lapped surface resulted in a 40% reduction in friction as compared with an unworked sealing surface.

The sealing rings 20 are useful in automatic transmissions, in which they are installed in grooves in a rotary shaft such as 44, as shown in Figure 3. The shaft 44 has a pair of annular grooves 46 and 48 in each of which is disposed a respective sealing ring 20. As best seen in Figure 2, the sealing ring 20 has a split 50 which permits such installation. These types of sealing ring are well-known. The shaft 44 is disposed in a housing 52. The shaft 44 has formed therein an axial fluid passage 54 which communicates with a radial fluid passage 56 through which fluid is directed between the seals 20. A passage 58 formed in the housing 52 is disposed to be in fluid communication with the space between the seals 20. Therefore, the fluid is freely transmitted between the passages, and is prevented from escaping by the seals 20. The fluid pressure acts on one flat annular surface 26 of each sealing ring and on the inner cylindrical surface 24 of each sealing ring to urge the sealing ring 20 outwardly and axially so that the cylindrical surface 22 seals against the housing 52 and the other flat annular surface 26 seals against a portion of the side wall of the respective annular groove 46 or 48.

During operation, the sealing rings 20 remain stationary in the housing 52 such that there is relative rotation between the rotary shaft 44 and the sealing rings 20. Due to the cold-working of the flat annular surface 26, as explained above, a hydrodynamic fluid film is generated between a flat annular surface 26 of each sealing ring 20 and the adjacent side wall of the respective grooves 46 and 48. It has been found that by utilizing these cast iron seals in commercially available transmissions, it is possible to reduce the transmission spin losses by approximately 10%. This results in an overall improvement in transmission efficiency that is reflected in improved fuel economy for the vehicle. Since either flat annular surface 26 of a sealing ring 20 may be the sealing surface when the ring is installed in the groove, it is desirable to cold-work both flat annular surfaces 26. This is accomplished by first cold-working one flat annular surface 26 and then re-inserting the sealing ring 20 in the work holder 10 so that the other flat annular surface 26 can likewise be cold-worked.

The cold-working described above results in a very useful shape in the resulting surface asperities which occur during the cold-working process. Since the cast iron shot carried by the flap members essentially move in somewhat of an arc, and the surfaces are moving relative to each other, the surface is burnished by the cast iron shot. This burnishing action results in a shallow slope of indentation and a large radius of curvature of the asperities. Such a surface provides a very good hydrodynamic film-generating surface.

## Claims

1. A method of making a cast iron sealing ring (20) that is adapted to be installed in an annular groove (46, 48) in a rotary shaft (44) with the outer peripheral surface (22) of the ring (20) in stationary sealing contact against a stationary housing surface (52) and a flat annular surface (26) of the ring (20) held by hydraulic fluid in rotary sealing contact with a side wall of the groove (46, 48), the flat annular surface (26) of the ring (20) having a hardness in the range of 45 $R_c$ to 50 $R_c$, characterised in that the method comprises the steps of:

mounting the sealing ring (20) in an annular groove (18) formed in a workpiece holder (10) with the flat annular surface (26) of the ring exposed;

rotating the workpiece holder (10) at a speed in the range of 90 to 110 revolutions per minute;

rotating a work tool (28), having a plurality of flexible flap members (34) with a plurality of cast shot embedded therein, at a speed in the range of 2600 to 3000 revolutions per minute about an axis that is disposed perpendicular to the axis of rotation of the workpiece holder;

effecting relative movement of the workpiece holder (10) and the work tool (28) to move the workpiece holder into the path of the flap members of the work tool with an interference amount in the range of 9 to 11 mm to effect cold-working of the flat annular surface (26) of the sealing ring (20); and

effecting relative movement of the workpiece holder (10) and the work tool (28) to retract the workpiece holder (10) from the path of the flap members (34).

2. A method according to claim 1, characterised in that the interference amount and the speeds of rotation of the work tool (28) and of the workpiece holder (10), the surface hardness of the sealing ring (20) and the time span within which the flap members (34) are disposed in interference with the flat annular surface (26) are such as to produce an angle of incidence in the flat annular surface (26) of the ring in the range of 2 to 3° and asperities with a radius of curvature in the range of 0.2 to 0.3 mm.

## Patentansprüche

1. Verfahren zum Herstellen eines gußeisernen Dichtungsringes (20), der zum Einsetzen in eine Ringnut (46, 48) in einer Drehwelle (44) ausgelegt ist, wobei die Außenumfangsfläche (22) des Ringes (20) in stationärer Dichtanlage gegen eine stationäre Gehäusefläche (52) ist und eine ebene Ringfläche (26) des Ringes (20) durch Hydraulikfluid in drehender Dichtanlage an einer Seitenwand der Nut (46, 48) ist, die ebene Ringfläche (26) des Ringes eine Härte im Bereich von 45 $R_c$ bis 50 $R_c$ besitzt, dadurch gekennzeichnet, daß das Verfahren folgende Schritte umfaßt:

Befestigen des Dichtringes (20) in einer in einem Werkstückhalter (10) ausgebildeten Ringnut (18) mit einer freiliegenden ebenen Ringfläche (26);

Drehen des Werkstückhalters (10) mit einer Geschwindigkeit im Bereich von 90 bis 110 Umdrehungen pro Minute;

Drehen eines Bearbeitungswerkzeuges (28) mit einer Vielzahl von flexiblen Lappenteilen (34), in die eine Vielzahl von Gußschrotteilen eingebettet ist, mit einer Geschwindigkeit im Bereich von 2600 bis 3000 Umdrehungen pro Minute um eine Achse, die senkrecht zur Drehachse des Werkstückhalters angeordnet ist;

Ausführen einer Relativbewegung des Werkstückhalters (10) zu dem Bearbeitungswerkzeug (28), um den Werkstückhalter in den Weg der Lappenteile des Bearbeitungswerkzeuges mit einer Eingrifftiefe im Bereich von 9 bis 11 mm zu bewegen, um eine Kaltbearbeitung der ebenen Ringfläche (26) des Dichtringes (20) zu bewirken; und

Ausführen einer Relativbewegung des Werkstückhalters (10) zu dem Bearbeitungswerkzeug (28), um den Werkstückhalter (10) aus dem Weg der Lappenteile (34) zurückzuziehen.

2. Verfahren nach Anspruch 1, dadurch gekennzeichnet, daß die Eingrifftiefe und die Drehgeschwindigkeiten des Bearbeitungswerkzeuges (28) und des Werkstückhalters (10), die Oberflächenhärte des Dichtringes (20) und der Zeitraum, innerhalb dessen die Lappenteile (34) in Eingrifftiefe mit der ebenen Ringfläche (26) angeordnet sind, so sind, daß sie einen Einschlagwinkel in der Ebene Ringfläche (26) des Ringes im Bereich von 2 bis 3° und Oberflächenrauhigkeiten mit einem Krümmungsradius im Bereich von 0,2 bis 0,3 mm erzeugen.

## Revendications

1. Procédé de fabrication d'une bague d'étanchéité (10) en fonte qui est adaptée pour être montée dans une gorge annulaire (46, 48) ménagée dans un arbre rotatif (44), la surface périphérique externe (22) de la bague (20) étant en contact d'étanchéité fixe avec une surface (52) d'un carter fixe et une surface annulaire plate (26) de la bague étant maintenue par le fluide hydraulique en contact d'étanchéité rotatif avec un paroi latérale de la gorge (46, 48), la surface annulaire plate (26) de la bague (20) ayant une dureté dans l'intervalle de 45 $R_c$ à 50 $R_c$, caractérisé en ce que le procédé comprend les phases consistant à:

monter la bague d'étanchéité (20) dans une gorge annulaire (18) formée dans un porte-pièce (10) en laissant une surface annulaire plate (26) de la bague exposée;

faire tourner le porte-pièce (10) à une vitesse dans l'intervalle de 90 à 110 tours par minute;

faire tourner un outil (28) possédant une pluralité de palettes battantes flexibles (34) dans lesquels est enrobée une certaine quantité de grenaille de fonte, à une vitesse dans l'intervalle de 2600 à 3000 tours par minute autour d'un axe qui est disposé perpendiculairement à l'axe de rotation du porte-pièce;

réaliser un mouvement relatif entre le porte-pièce (10) et l'outil (28) pour placer le porte-pièce sur le trajet des palettes battantes de l'outil avec une amplitude d'intersection dans l'intervalle de 9 à 11 mm pour réaliser un travail à froid de la surface annulaire plate (26) de la bague d'étanchéité (20); et

réaliser un mouvement relatif du porte-pièce (10) et de l'outil (28) pour rétracter le porte-pièce (10) du trajet des palettes battantes (34).

2. Procédé selon la revendication 1, caractérisé en ce que l'amplitude d'intersection et les vitesses de rotation de l'outil (28) et du porte-pièce (10), la dureté de surface de la bague d'étanchéité (20) et l'intervalle de temps pendant lequel les palettes battantes (34) sont disposées en intersection par rapport à la surface annulaire plate (26) sont de nature à produire un angle d'incidence dans la surface annulaire plate (26) de la bague dans l'intervalle de 2 à 3 degrés et des aspérités possédant un rayon de courbure dans l'intervalle de 0,2 à 0,3 mm.

Fig. 1

Fig. 2

Fig. 3